# EUROPEAN PATENT APPLICATION

(11) **EP 4 726 880 A1**
(43) Date of publication of application: **15.04.2026**
(21) Application number: 25190519.6
(22) Date of filing: 18.07.2025
(51) Int. Cl.: H01M 50/209, H01M 50/242, H01M 50/264, H01M 50/291, H01M 50/293

(54) **BATTERY MODULE**

(30) Priority: 11.10.2024 KR 20240138331
(71) Applicant: SAMSUNG SDI CO., LTD., Yongin-si, Gyeonggi-do 17084 (KR)
(72) Inventor: JUNG, Jung Kyun, 16678 Suwon-si (KR)
(74) Representative: Marks & Clerk LLP

(57) **Abstract**

The present disclosure relates to a battery module, and the object to be solved is directed to providing a battery module capable of preventing heat propagation of a battery using an insulating cover. To this end, the present disclosure provides a battery module including one or more cell stacks formed by arranging a plurality of battery cells and having a first stack surface facing in a first direction and a second stack surface facing in a second direction and a module case in which the cell stacks are accommodated, wherein the battery cell includes an electrode assembly, a cell case having a first surface facing in the first direction and a second surface facing in the second direction, and an insulating cover coupled to the first surface and the second surface, and the second stack surface is insulated by a plurality of insulating covers provided on a plurality of battery cells.

## Description

### FIELD

Aspects of embodiments of the present disclosure relates to a battery module.

### BACKGROUND

In general, secondary batteries can be discharged and recharged unlike primary batteries that cannot be charged. Low-capacity secondary batteries are used in small portable electronic devices, such as smart phones, feature phones, notebook computers, digital cameras, and camcorders, while large-capacity secondary batteries are widely used as power sources for driving motors and power storages for hybrid vehicles or electric vehicles. The secondary battery includes an electrode assembly composed of a positive electrode and a negative electrode, a case for accommodating the electrode assembly, electrode terminals connected to the electrode assembly, etc.

The secondary battery may be used as a battery pack formed of a plurality of unit battery cells connected in series and/or parallel to provide high energy density. The battery pack may be formed by interconnecting electrode terminals of a plurality of unit batteries to satisfy the required amount of power, for example, to implement a high-power secondary battery for an electric vehicle.

The above-described information disclosed in the technology that forms the background of the present disclosure is only intended to improve understanding of the background of the present disclosure, and thus may include information that does not constitute the related art.

### SUMMARY

An aspect of embodiments of the present disclosure is directed to providing a battery module capable of preventing heat propagation of a battery using an insulating cover.

These and other aspects and features of the present disclosure will be described in or will be apparent from the following description of some embodiments of the present disclosure.

A battery module according to one or more embodiments of the present disclosure includes one or more cell stacks formed by arranging a plurality of battery cells in a first direction and having a first stack surface facing in the first direction and a second stack surface facing in a second direction and a module case in which the cell stacks are accommodated, wherein each of the battery cells includes an electrode assembly, a cell case in which the electrode assembly is accommodated and which has a first surface facing in the first direction and a second surface facing in the second direction, and an insulating cover coupled to the first surface and the second surface, and the second stack surface is insulated by a plurality of insulating covers provided on a plurality of (or other) battery cells.

The insulating cover may include a first cover portion coupled to the first surface, and a second cover portion formed by extending a portion of a thickness direction of the first cover portion in the first direction and coupled to the second surface. The second cover portion may be formed such that a portion of the thickness direction of the first cover part extends in the first direction and coupled to the second surface.

The insulating cover may include a first layer that includes a first material and is formed on the first cover portion and a second layer that includes a second material and is formed to extend from the first cover portion to the second cover portion.

The first material may include aerogel, and the second material may include mica.

The first cover portion may include an insulating layer including an insulating material and a first insulating layer including an insulating material and stacked on the insulating layer, and the second cover portion may be formed by extending the first insulating layer in the first direction.

The insulating layer may include a buffering member that has a thickness reduced due to a load acting in the first direction.

The first cover portion may further include a second insulating layer stacked on the insulating layer at a side opposite to that of the first insulating layer.

The cell stack may include a first cell stack formed by arranging the plurality of battery cells that include a first battery cell and a second battery cell in the first direction, the insulating cover may include a first cover portion coupled to the first surface and a second cover portion connected to the first cover portion and coupled to the second surface, and the second stack surface of the first cell stack may be insulated by the plurality of second cover portions provided on the plurality of (or other) battery cells.

The plurality of battery cells provided in the first cell stack may be mutually insulated by the first cover portions.

The cell stack may further include a second cell stack disposed in the second direction of the first cell stack, and the first cell stack and the second cell stack may be mutually insulated by the plurality of second cover portions coupled to the plurality of (or other)battery cells.

The second cover portion may include a second cover main body in contact with the second surface and an overlapping portion connected to the second cover main body and extending to an outside of the second surface, and the overlapping portion provided on the first battery cell may come into contact with the second cover portion provided on the second battery cell.

The overlapping portion may include a first fastener disposed between the second cover main body and the first cover portion and a second fastener positioned at a side opposite to the first fastener with the second cover main body interposed therebetween, and the first fastener provided on the first battery cell may be fastened to the second fastener provided on the second battery cell.

One of the first fastener and the second fastener may have a shape of a groove that is concave in the second direction, and the other of the first fastener and the second fastener may have a shape that protrudes convexly in the second direction.

The cell stack may further include a third stack surface facing in a third direction substantially opposite to the second direction, the cell case may further include a third surface positioned at a side opposite to the second surface, the insulating cover may further include a third cover portion connected to the first cover portion and in contact with the third surface, and the third stack surface may be insulated by the plurality of third cover portions provided on the plurality of (or other) battery cells.

The module case may include a first inner surface positioned in the second direction of the first cell stack and insulated from the second stack surface by the second cover portion, and a second inner surface positioned in the third direction of the first cell stack and insulated from the third stack surface by the third cover portion.

The cell stack may further include a second cell stack disposed in the second direction of the first cell stack, and the first cell stack and the second cell stack may be mutually insulated by the plurality of second cover portions and third cover portions that are coupled to the plurality of (or other) battery cells.

The plurality of second cover portions provided in the first cell stack may be disposed to face and overlap in the second direction the plurality of third cover portions provided in the second cell stack.

The first cover portion may have a first thickness, the second cover portion may have a second thickness smaller than the first thickness, and the third cover portion may have a third thickness smaller than the first thickness.

The module case may further include the first inner surface positioned in the second direction of the second cell stack and insulated from the second stack surface by the plurality of second cover portions.

The module case may further include the second inner surface positioned in the third direction of the first cell stack and insulated from the first cell stack by the third cover portion.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic perspective view showing a battery module according to embodiments of the present disclosure;
FIG. 2 is a schematic exploded perspective view showing main parts of the battery module according to embodiments of the present disclosure;
FIG. 3 is a schematic perspective view showing a cell stack according to embodiments of the present disclosure;
FIG. 4 is a schematic perspective view showing a battery cell according to embodiments of the present disclosure;
FIG. 5 is a schematic plan view showing the battery cell according to embodiments of the present disclosure;
FIG. 6 is a schematic cross-sectional view showing main parts of the battery cell according to embodiments of the present disclosure;
FIG. 7 is a schematic exploded perspective view showing the battery cell according to embodiments of the present disclosure;
FIG. 8 is a schematic exploded perspective view showing main parts of an insulating cover according to embodiments of the present disclosure;
FIG. 9 is an enlarged view of portion A in FIG. 8;
FIG. 10 is a cross-sectional view along line B-B' in FIG. 8;
FIG. 11 is a cross-sectional view along line C-C' in FIG. 8;
FIG. 12 is a cross-sectional view along line D-D' in FIG. 8;
FIG. 13 is a cross-sectional view along line E-E' in FIG. 8;
FIG. 14 is a schematic plan view showing main parts of the cell stack according to embodiments of the present disclosure;
FIG. 15 is an enlarged view of portion F in FIG. 14;
FIG. 16 is a conceptual diagram showing an assembly tolerance of an insulating cover;
FIG. 17 is a conceptual diagram showing an operation of reducing a thickness of an insulating cover and implementing a buffering function;
FIG. 18 is a schematic plan view showing main parts of a cell stack according to embodiments of the present disclosure;
FIG. 19 is an enlarged view of portion G in FIG. 18;
FIG. 20 is an enlarged view of portion H in FIG. 19;
FIG. 21 is a schematic perspective view showing a battery module according to embodiments of the present disclosure; and
FIG. 22 is a schematic perspective view showing the battery module according to embodiments of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

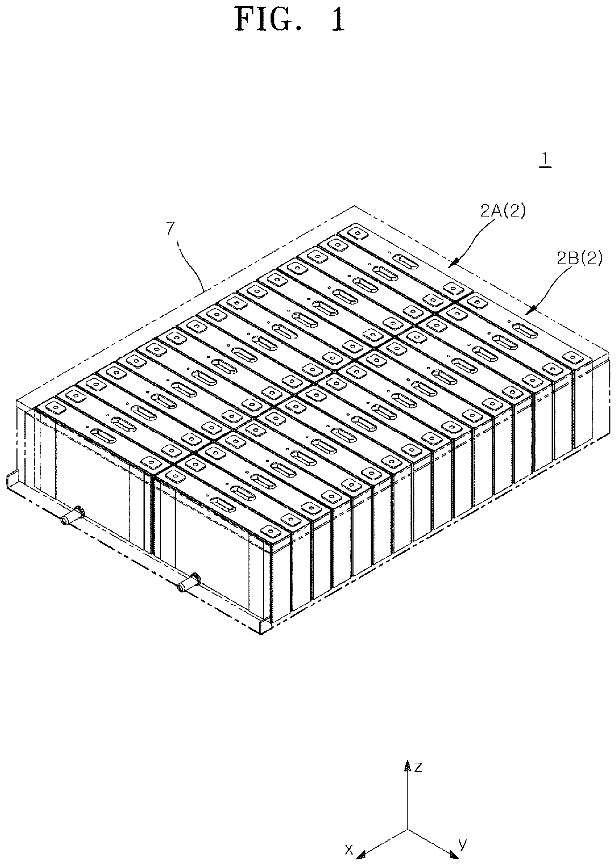

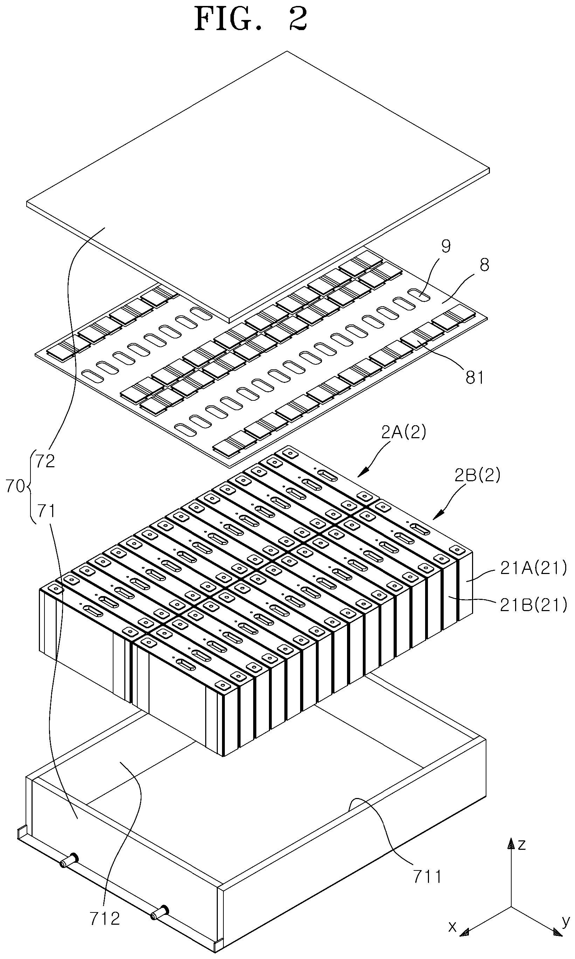

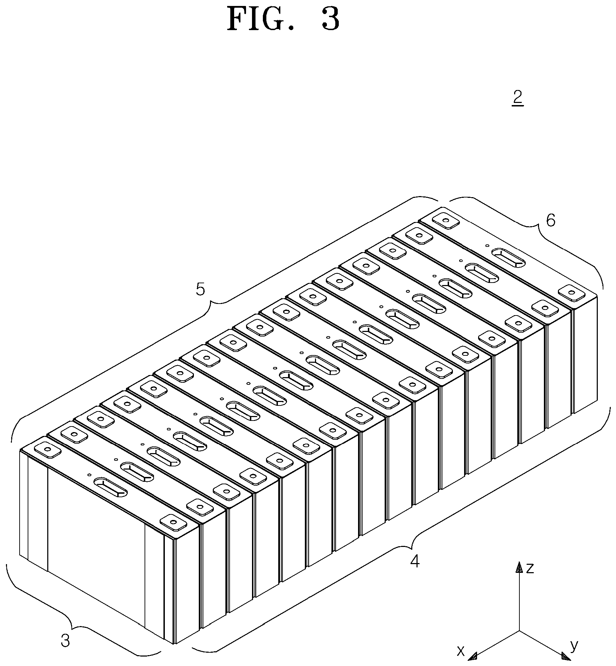

FIG. 1 is a schematic perspective view showing a battery module according to embodiments of the present disclosure, FIG. 2 is a schematic exploded perspective view showing main parts of the battery module according to embodiments of the present disclosure, and FIG. 3 is a schematic perspective view showing a cell stack according to embodiments of the present disclosure.

Hereinafter, the shape and arrangement relationship of components will be described with respect to an x-direction and z-direction shown in FIG. 1. A first direction can correspond to the x-direction, and a second direction can correspond to a y-direction. In FIG. 1, the x-direction may refer to a front-rear direction or forward, and the y-direction may refer to a left-right direction or a right direction. In the description of the first direction, the first direction is not limited to the description of the first direction and can be described by an expression suitable for the description thereof among the first direction, x-direction, front-rear direction, or forward. Therefore, in the description of the present disclosure, the first direction will be described interchangeably with the x-direction, front-rear direction, and forward. In addition, for the same reason as the first direction, the second direction will be described interchangeably with the y-direction, left-right direction, lateral direction, and right direction. In addition, for the same reason, the z-direction will be described interchangeably with a vertical direction and upward.

Referring to FIGS. 1 to 3, a battery module 1 according to embodiments of the present disclosure includes a cell stack 2 and a module case 7.

The cell stack 2 is formed by arranging a plurality of battery cells 21 in the front-rear direction (x-direction). The cell stack 2 has a first stack surface 3 facing in the front direction (x-direction) and a second stack surface 4 facing in the right direction (y-direction). The cell stack 2 may be formed by arranging the plurality of battery cells 21 having a rectangular parallelepiped shape in the front-rear direction (x-direction).

The cell stack 2 may further include a third stack surface 5 facing in a left direction and a fourth stack surface 6 facing rearward. The third stack surface 5 may be positioned at a side opposite to the second stack surface 4, and the fourth stack surface 6 may be positioned at a side opposite to the first stack surface 3. The first stack surface 3, the second stack surface 4, the third stack surface 5, and the fourth stack surface 6 of the cell stack 2 may be front, right side, left side, and rear surfaces of the cell stack 2, respectively.

The first stack surface 3 may correspond to a front surface of the battery cell 21 positioned at the frontmost position among the plurality of battery cells 21 arranged in the front-rear direction (x-direction). The second stack surface 4 may be formed by arranging the right side surfaces of the plurality of battery cells 21 in the front-rear direction (x-direction). The third stack surface 5 may be formed by arranging the left side surfaces of the plurality of battery cells 21 in the front-rear direction (x-direction). The fourth stack surface 6 may correspond to a rear surface of the battery cell 21 positioned at the rearmost position among the plurality of battery cells 21 arranged in the front-rear direction (x-direction).

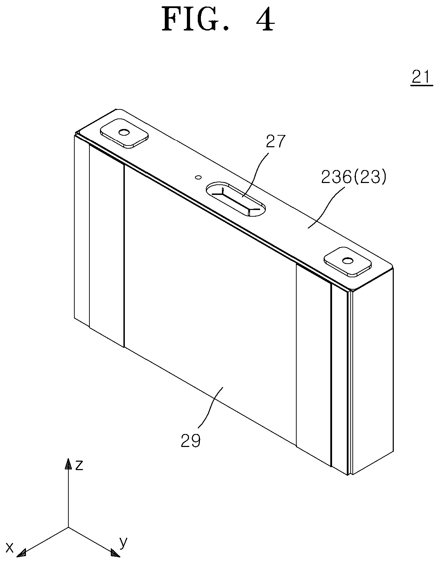

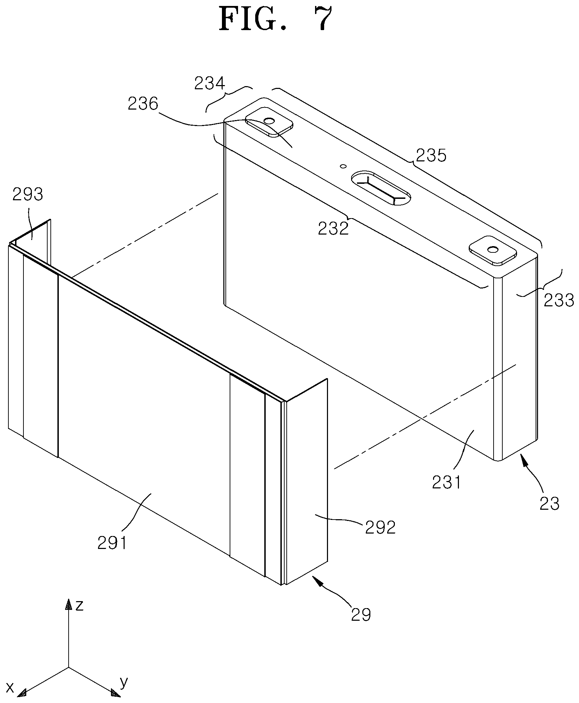

An insulating cover 29 may be provided on the front surface and right side surface of the battery cell 21 (see FIGS. 4 and 7). The first stack surface 3 may be insulated by the insulating cover 29 provided on the front surface of the battery cell 21 positioned at the frontmost position among the plurality of battery cells 21. Gaps between the plurality of battery cells 21 may be insulated by the insulating cover 29 provided on each of the plurality of battery cells 21 and positioned at the rear thereof.

The second stack surface 4 may be insulated by the plurality of insulating covers 29 provided on right side surfaces of a plurality of (or other) battery cells 21. The insulating cover 29 may also be provided on a left side surface of the battery cell 21. The third stack surface 5 may be insulated by the plurality of insulating covers 29 provided on left side surfaces of the plurality of (or other) battery cells 21.

A plurality of cell stacks 2 including a first cell stack 2A and a second cell stack 2B may be provided. The first cell stack 2A may be formed by arranging the plurality of battery cells 21 including the first battery cell 21A and the second battery cell 21B in the front-rear direction (x-direction). The second cell stack 2B may be disposed at a right side (in the y-direction) of the first cell stack 2A. In this case, the plurality of battery cells 21 may be arranged in the front-rear direction (x-direction) of the module case 7, and at the same time, may be arranged in the left-right direction (y-direction).

A plurality of cell stacks 2 including a third cell stack (not shown) in addition to the first cell stack 2A and the second cell stack 2B may be provided. The third cell stack may be disposed in a third column at a right side of the second cell stack 2B. In this way, the plurality of cell stacks 2 may be provided in a plurality of columns in the left-right direction. In addition, the plurality of cell stacks 2 may be provided in a plurality of rows in the front-rear direction.

The first cell stack 2A and the second cell stack 2B may each form one column extending in the front-rear direction (x-direction). The first cell stack 2A may form a first column, and the second cell stack 2B may form a second column at a right side of the first cell stack 2A. The first cell stack 2A and the second cell stack 2B may be disposed together to form two columns in the left-right direction (y-direction).

The module case 7 accommodates the cell stack 2. The module case 7 may support the cell stack 2 and protect the cell stack 2 from external impact and foreign substances. One or more cell stacks 2 may be provided, and the module case 7 may accommodate the one or more cell stacks 2. The cell stacks 2 may include the first cell stack 2A and the second cell stack 2B, and the module case 7 may accommodate the first cell stack 2A and the second cell stack 2B together.

The module case 7 may include a case body 71 and a case cover 72.

The case body 71 may provide a space in which the battery cells 21 may be accommodated. The case body 71 according to embodiments may be formed to have a box shape with a hollow and one open side. For example, based on FIG. 2, the open side of the case body 71 may be disposed to face upwardly. A cross-sectional shape of the case body 71 is not limited to a quadrangular square and may be changed in design to have various shapes such as a polygonal, circular, or elliptical shape.

The case cover 72 may be coupled to the case body 71 and may close an internal space of the case body 71. The case cover 72 according to embodiments may be formed to have a substantially plate shape. The case cover 72 may be positioned to face the open side of the case body 71, for example, a top surface of the case body 71. The case cover 72 may be fixed to the case body 71 by various types of coupling methods such as bolting, welding, and fitting.

The battery module 1 may further include a busbar holder 8 and a holder vent hole 9.

The busbar holder 8 may be positioned inside a housing 10 and may function as a component that supports a busbar 81.

The busbar holder 8 according to embodiments may be formed to have a flat shape. Top and bottom surfaces of the busbar holder 8 may be disposed to face a bottom surface of the case cover 72 and an upper surface of the battery cell 21, respectively. The bottom surface of the busbar holder 8 may be disposed to face a cap plate 236 described below (see FIG. 4). The busbar holder 8 may include an electrically insulating polymer compound material.

The busbar 81 may be electrically connected to the battery cell 21. The busbar 81 may be fixed to the busbar holder 8 by various types of coupling methods such as welding, bolting, and fitting. The busbar 81 may come into contact with a cell terminal 237 of the battery cell 21. The busbar 81 may include a conductive material such as aluminum, nickel, or copper to be electrically connected to the cell terminal 237.

A plurality of busbars 81 may be provided. The plurality of busbars 81 may connect the plurality of battery cells 21 in series or in parallel. The number and arrangement form of the plurality of busbars 81 may be changed in design in various ways depending on the series and parallel connection structures of the battery cells 21.

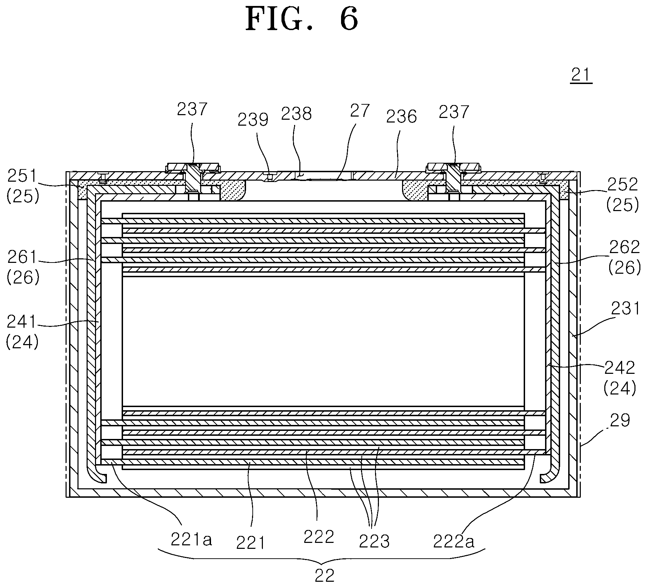

A holder vent hole 9 may function as a component that provides a discharge path in the busbar holder 8 for gas, flames, smoke, etc. discharged from the battery cells 21. The holder vent hole 9 according to embodiments may be formed to have a hole shape that passes through the busbar holder 8 in the vertical direction (z-direction). The holder vent hole 9 may be disposed to face a vent hole 238, which is described below, of the battery cell 21 (see FIG. 6).

A plurality of holder vent holes 9 may be provided. The plurality of holder vent holes 9 may be arranged in a longitudinal direction of the module case 7. The number of holder vent holes 9 may be formed to correspond to the number of battery cells 21. The holder vent holes 9 may be individually disposed to face the vent holes 238 of battery cells 21. A cross-sectional area of the holder vent hole 9 may be smaller than a cross-sectional area of the vent hole 238 of the battery cell 21.

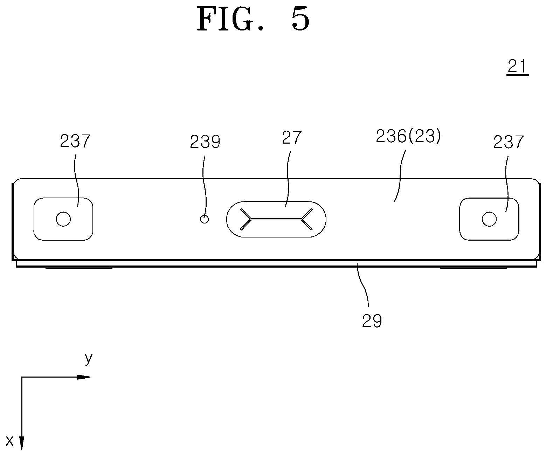

FIG. 4 is a schematic perspective view showing a battery cell according to embodiments of the present disclosure, FIG. 5 is a schematic plan view showing the battery cell according to embodiments of the present disclosure, FIG. 6 is a schematic cross-sectional view showing main parts of the battery cell according to embodiments of the present disclosure, and FIG. 7 is a schematic exploded perspective view showing the battery cell according to embodiments of the present disclosure.

The battery cell 21 may function as a unit structure that stores and supplies power in the battery module 1. Hereinafter, an example in which the battery cell 21 is a lithium ion battery and a prismatic battery having a rectangular parallelepiped shape will be described. However, the present disclosure is not limited thereto, and the battery cell 21 may be a lithium polymer battery or a cylindrical battery.

Referring to FIGS. 4 to 7, the battery cell 21 according to embodiments of the present disclosure includes an electrode assembly 22, a cell case 23, and an insulating cover 29.

The electrode assembly 22 may include a positive electrode 221, a negative electrode 222, and a separator 223 disposed between the positive electrode 221 and the negative electrode 222. The positive electrode 221 and the negative electrode 222 may include a coated portion (no reference numeral) in which an active material is applied to a current collector (no reference numeral) formed of a thin metal foil and uncoated portions 221a and 222a not coated with the active material.

The electrode assembly 22 may be wound in the form of a jelly roll after the separator 223 as an insulator is interposed between the positive electrode 221 and the negative electrode 222. However, the electrode assembly 22 is not limited to such a form and may be formed as a stacked structure in which the positive electrodes 221 and the negative electrodes 222 that are formed of a plurality of sheets are alternately stacked with the separator 223 interposed therebetween. One electrode assembly 22 may be formed or a plurality of electrode assemblies 22 may be provided.

The cell case 23 may form the overall appearance of the battery cell 21. The cell case 23 accommodates the electrode assembly 22 therein. The cell case 23 has a first surface 232 facing forward (x-direction) and a second surface 233 facing in the right direction (y-direction). The cell case 23 may include a conductive metal material such as aluminum, an aluminum alloy, or nickel-plated steel.

The cell case 23 may further have a third surface 234 facing in the left direction and a fourth surface 235 facing rearward. The third surface 234 may be positioned at a side opposite to the second surface 233, and the fourth surface 235 may be positioned at a side opposite to the first surface 232. The first surface 232, the second surface 233, the third surface 234, and the fourth surface 235 of the cell case 23 may be front, right side, left side, and rear surfaces of the cell case 23, respectively.

The cell case 23 may include a case body 231, a cap plate 236, a cell terminal 237, a vent hole 238, and an electrolyte injection port 239.

The case body 231 may be formed to have a rectangular parallelepiped shape with one open side. The open side of the case body 231 may be disposed to face upwardly inside the module case 7 and disposed to face the case cover 72 vertically (see FIG. 2).

The case body 231 is shown as having a prismatic shape in the drawing, but the present disclosure is not limited thereto, and the case may be formed in various shapes such as a circular or pouch shape. In addition, the case body 231may be formed of a metal such as aluminum, an aluminum alloy, or nickel-plated steel, a laminate film or plastic that forms a pouch, etc.

The cap plate 236 may be coupled to the case body 231 to seal the cell case 23. For example, the cap plate 236 may be formed to have a flat shape. The cap plate 236 may be disposed at the top of the case body 231 to cover the open side of the case body 231. The cap plate 236 may be coupled to the case body 231 by various types of coupling methods such as welding, bolting, and fitting.

The outer appearance of the cell case 23 may be formed by the case body 231 and the cap plate 236. The cell case 23 may have a rectangular parallelepiped shape that has a width in the front-rear direction (x-direction) smaller than a width in the left-right direction (y-direction). The cell case 23 may have a flat rectangular parallelepiped shape in the front-rear direction (x-direction). The first surface 232, the second surface 233, the third surface 234, and the fourth surface 235 of the cell case 23 may be the front, right side, left side, and rear surfaces of the cell case 23, respectively.

The cell terminal 237 may be installed to pass through the cap plate 236 and protrude outward from the cap plate 236. An outer circumferential surface of an upper pillar of the cell terminal 237 may be threaded and fixed to the cap plate 236 with a nut (no reference numeral). However, the present disclosure is not limited thereto, and the cell terminal 237 may have a rivet structure and thus may be joined by riveting and bonded by being welded to the cap plate 236.

A pair of cell terminals 237 protruding outward from the cap plate 236 may be provided. The pair of cell terminals 237 may be individually connected to the positive electrode 221 and the negative electrode 222 of the electrode assembly 22. Therefore, the pair of cell terminals 237 may each function as one of a positive terminal and a negative terminal of the battery cell 21.

The cell terminal 237 may be electrically connected to a first current collector 241 and a second current collector 242. The pair of cell terminals 237 may each be bonded to one of the first current collector 241 and the second current collector 242 by welding. However, the present disclosure is not limited thereto, and the cell terminal 237 may be formed integrally with the first current collector 241 or formed integrally with the second current collector 242.

The vent hole 238 may be formed to have a hole shape that passes through both surfaces of the cap plate 236 vertically. The vent hole 238 may function as a component that provides a path through which flames, gases, smoke, etc. generated inside the cell case 23 are discharged from the battery cell 21 during thermal runaway of the battery cell 21. The bottom of the vent hole 238 may be connected to an internal space of the case body 231. The top of the vent hole 238 may be connected to an external space of the cap plate 236. A cross-sectional shape of the vent hole 238 may be changed in design to have various shapes such as elliptical, circular, and polygonal shapes.

The electrolyte injection port 239 may be formed to pass through the cap plate 236. A sealing plug (not shown) may be installed in the electrolyte injection port 239. An insulating member 25 may be installed between the electrode assembly 22 and the cap plate 236. One end of a separating member 26 that may be installed to face one side surface of the electrode assembly 22 may be installed between the insulating member 25 and the electrode assembly 22.

The battery cell 21 may further include a current collector 24, the insulating member 25, the separating member 26, and a vent member 27.

The current collector 24 may include the first current collector 241 and the second current collector 242. The first current collector 241 and the second current collector 242 may be bonded to a positive electrode uncoated portion 110a and a negative electrode uncoated portion 120a, respectively, by welding. The first current collector 241 and the second current collector 242 may function as a positive electrode current collector and a negative electrode current collector of the battery cell 21, respectively.

The insulating member 25 may include a first lower insulating member 251 and a second lower insulating member 252. Each of the first lower insulating member 251 and the second lower insulating member 252 may be installed between the electrode assembly 22 and the cap plate 236.

The separating member 26 may include a first separating member 261 and a second separating member 262. The first separating member 261 may be installed between the first lower insulating member 251 and the electrode assembly 22. The second separating member 262 may be installed between the second lower insulating member 252 and the electrode assembly 22.

The cell terminal 237 bonded to the first current collector 241 by welding may be coupled to the first lower insulating member 251 and the first separating member 261. The cell terminal 237 bonded to the second current collector 242 by welding may be coupled to the second lower insulating member 252 and the second separating member 262.

The vent member 27 may be installed in the vent hole 238 and opened and closed in conjunction with a change in internal pressure of the cell case 23. That is, the vent member 27 may maintain a closed state during normal operation of the battery cell 21 to seal the vent hole 238. The vent member 27 may be opened when the internal pressure of the cell case 23 rises to a set level or more due to overcharging or fire of the battery cell 21 and may discharge flames, gases, smoke, etc. generated from the inside of the cell case 23 to the outside of the cell case 23.

The insulating cover 29 is coupled to the first surface 232 and the second surface 233 of the cell case 23. The first surface 232 may be a front surface of the cell case 23, and the second surface 233 may be a right side surface of the cell case 23.

The first stack surface 3 of the cell stack 2 may be insulated by the insulating cover 29 that covers the first surface 232 of the battery cell 21 positioned at the frontmost position among the plurality of battery cells 21 arranged in the front-rear direction (x-direction) (see FIG. 3). Gaps between the plurality of battery cells 21 may be insulated by the plurality of insulating covers 29 covering the first surfaces 323 of the plurality of battery cells 21.

The second stack surface 4 of the cell stack 2 is insulated by the plurality of insulating covers 29 covering the second surfaces 233 of the plurality of (or other) battery cells 21. The insulating cover 29 may also be coupled to the third surface 234 of the cell case 23. The third stack surface 5 may be insulated by the plurality of insulating covers 29 covering the third surfaces 324 of the plurality of (or other) battery cells 21.

The insulating cover 29 may include a first cover portion 291, a second cover portion 292, and a third cover portion 293.

The first cover portion 291 may be coupled to the first surface 232. The second cover portion 292 may be coupled to the second surface 233. The third cover portion 293 may be coupled to the third surface 234. The first surface 232, the second surface 233, and the third surface 234 may be the front, right side, and left side surfaces of the cell case 23, respectively. The first cover portion 291, the second cover portion 292, and the third cover portion 293 may be attached to the front, right side, and left side of the cell case 23, respectively.

The first cover portion 291 may have a flat shape that extends in the left-right direction, and the second cover portion 292 and the third cover portion 293 may have a flat shape that extends in the front-rear direction. The second cover portion 292 and the third cover portion 293 may be disposed to face one another in the left-right direction and disposed in parallel in the front-rear direction.

The second cover portion 292 may be formed to extend rearward from a right end of the first cover portion 291. The third cover portion 293 may be formed to extend rearward from a left end of the first cover portion 291. The first cover portion 291, the second cover portion 292, and the third cover portion 293 may have a "U" shape with an entirely open rear portion.

The insulating cover 29 may be formed as a single sheet member (no reference numeral). The first cover portion 291, the second cover portion 292, and the third cover portion 293 may be manufactured in a form that is connected integrally. The insulating cover 29 may be formed of a material having flexibility that enables bending or folding of a boundary between the first cover portion 291, the second cover portion 292, and the third cover portion 293. The insulating cover 29 may form the second cover portion 292 and the third cover portion 293 at both sides of the first cover portion 291 by folding both side portions of the sheet member having a flat plate shape rearward.

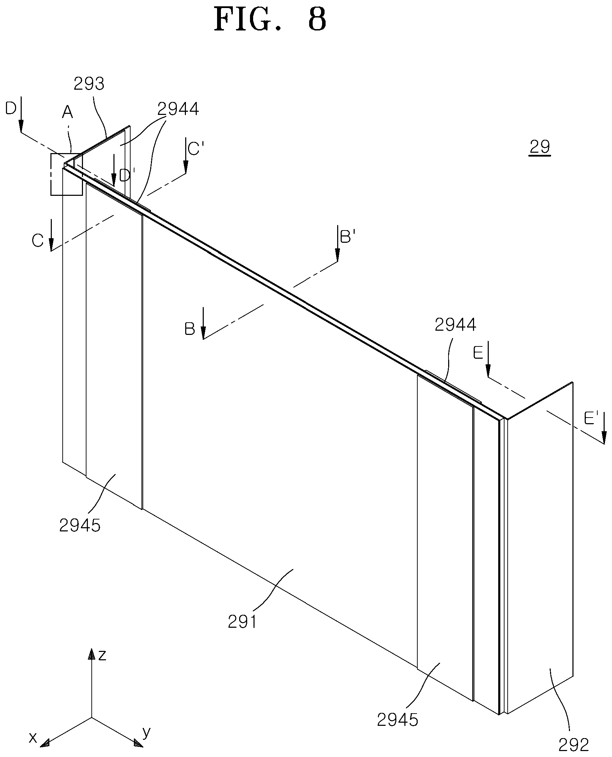

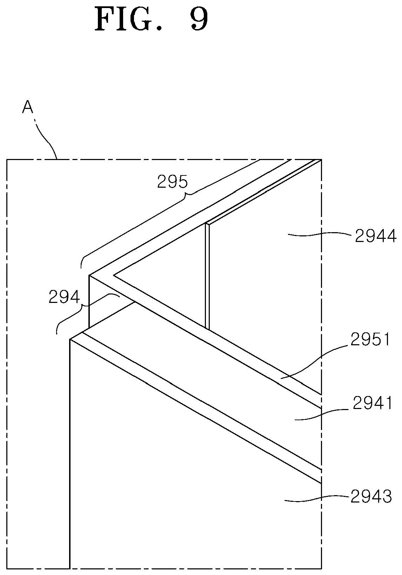

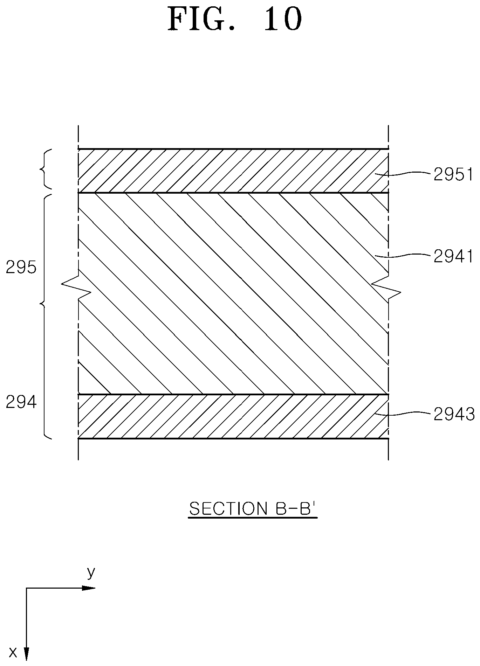

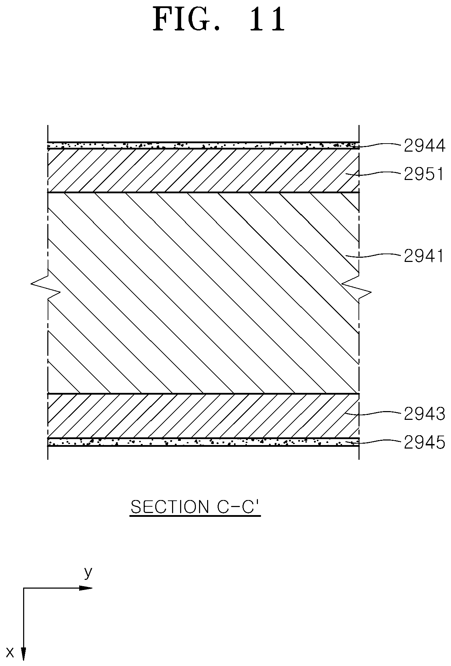

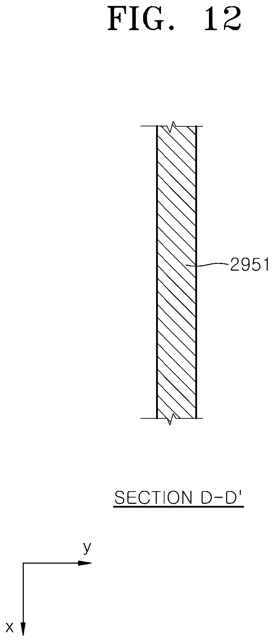

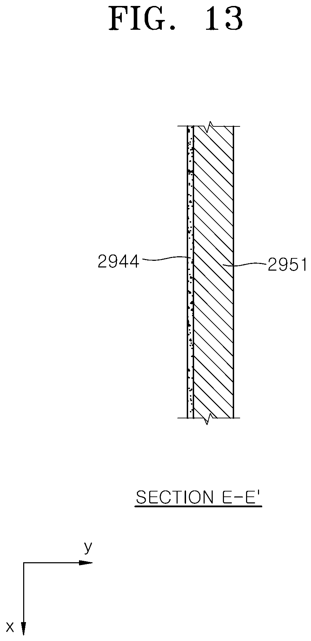

FIG. 8 is a schematic exploded perspective view showing main parts of the insulating cover according to embodiments of the present disclosure, FIG. 9 is an enlarged view of portion A in FIG. 8, FIG. 10 is a cross-sectional view along line B-B' in FIG. 8, FIG. 11 is a cross-sectional view along line C-C' in FIG. 8, FIG. 12 is a cross-sectional view along line D-D' in FIG. 8, and FIG. 13 is a cross-sectional view along line E-E' in FIG. 8.

Referring to FIGS. 7 to 13, the insulating cover 29 may include a first layer 294 and a second layer 295. The first layer 294 may include a first material and may be formed on the first cover portion 291. The second layer 295 may include a second material and may be formed on the first cover portion 291. The first material may include an insulating material such as aerogel. The second material may include an insulating material such as mica.

A portion of the first cover portion 291 in the thickness direction may extend in the front-rear direction to form the second cover portion 292 and the third cover portion 293. The first cover portion 291 may be formed by stacking a plurality of layers including the first layer 294 and the second layer 295. The second cover portion 292 and the third cover portion 293 may include the second layer 295. The second layer 295 may be formed to extend from the first cover portion 291 to the second cover portion 292.

The first cover portion 291 may have a first thickness. The second cover portion 292 may have a second thickness smaller than the first thickness. The third cover portion 293 may have a third thickness smaller than the first thickness. The second thickness and the third thickness may be the same.

The first cover portion 291 may have a greater thickness than the second cover portion 292 and the third cover portion 293. Therefore, a step may be formed at a boundary between the first cover portion 291 and the second cover portion 292 and a boundary between the first cover portion 291 and the third cover portion 293. Using such a step, the boundary between the first cover portion 291 and the second cover portion 292 and the boundary between the first cover portion 291 and the third cover portion 293 can easily match corners of the cell case 23 having a rectangular parallelepiped shape.

While the insulating cover 29 is coupled to the cell case 23 having a rectangular parallelepiped shape, the first cover portion 291 may have the first thickness in the front-rear direction and extend in the left-right direction. In this case, the second cover portion 292 may have the second thickness in the left-right direction and extend in the front-rear direction. The third cover portion 293 may have the third thickness in the left-right direction and extend in the front-rear direction.

In this case, the boundaries between the first cover portion 291, the second cover portion 292, and the third cover portion 293 may be positioned to correspond to left and right ends of the first cover portion 291 and may have a form of a vertical line extending vertically. Since the second cover portion 292 and the third cover portion 293 have a smaller thickness than the first cover portion 291, it is easier to fold or bend the second cover portion 292 and the third cover portion 293 rearward than to bend the first cover portion 291 rearwardly.

Therefore, a front end of the second cover portion 292 corresponding to a connection portion connected to the first cover portion 291 may be folded or bent rearwardly, and a front end of the third cover portion 293 corresponding to a connection portion connected to the first cover portion 291 may be folded or bent rearward so that the first cover portion 291, the second cover portion 292, and the third cover portion 293 may face the first surface 232, the second surface 233, and the third surface 234, respectively.

In this case, a process of folding the connection portion connected to the first cover portion 291 of the second cover portion 292 rearward at the right end of the first cover portion 291 using the step formed at the right end of the first cover portion 291 can be reliably performed at a desired position and in a desired shape. In addition, a process of folding the connection portion connected to the first cover portion 291 of the third cover portion 293 rearward at the left end of the first cover portion 291 can be reliably performed at a desired position and in a desired shape.

In addition, by bending the second cover portion 292 and the third cover portion 293 that have a smaller thickness than the first cover portion 291 rather than the first cover portion 291, the first cover portion 291, the second cover portion 292, and the third cover portion 293 can be more stably prevented from being lifted from the cell case 23 while being attached to the first surface 232, the second surface 233, and the third surface 234, respectively, compared to bending the first cover portion 291.

The first cover portion 291 may include an insulating layer 2941, a first insulating layer 2951, and a second insulating layer 2943.

The insulating layer 2941 may be formed of an insulating material such as aerogel. The first insulating layer 2951 and the second insulating layer 2943 may be formed of an insulating material such as mica. The first insulating layer 2951 and the second insulating layer 2943 may be stacked on both surfaces of the insulating layer 2941. The first insulating layer 2951 may be stacked on a rear surface of the insulating layer 2941. The second insulating layer 2943 may be stacked on a front surface of the insulating layer 2941. The insulating layer 2941, the first insulating layer 2951, and the second insulating layer 2943 may be integrally adhered by an adhesive member (not shown) having an adhesive property.

The second cover portion 292 and the third cover portion 293 may include the first insulating layer 2951. The first insulating layer 2951 may extend continuously from the first cover portion 291 to the second cover portion 292 and the third cover portion 293. In this case, the insulating layer 2941 and the second insulating layer 2943 may correspond to the first layer 294. The first insulating layer 2951 may correspond to the second layer 295.

The first insulating layer 2951 may have a sheet structure in a "U" shape formed by all of the first cover portion 291, the second cover portion 292, and the third cover portion 293. The first insulating layer 2951 may have a width that is the sum of the widths of the first cover portion 291, the second cover portion 292, and the third cover portion 293. The insulating layer 2941 and the second insulating layer 2943 may have a sheet structure in the form of an upright flat plate which corresponds to the first cover portion 291. The insulating layer 2941 and the second insulating layer 2943 may have a width corresponding to the first cover portion 291.

The first cover portion 291 may have a structure in which the first insulating layer 2951 and the second insulating layer 2943 that include an insulating material are stacked on rear and front surfaces of the insulating layer 2941 including an insulating material, respectively. The first cover portions 291 are positioned between the plurality of battery cells 21 including the first battery cell 21A and the second battery cell 21B.

Therefore, gaps between the plurality of battery cells 21 may be insulated by the insulating layers 2941. In addition, at the same time, the gaps between the plurality of battery cells 21 may be insulated in multiple stages by the plurality of insulating layers 2951 and 2943 including the first insulating layer 2951 and the second insulating layer 2943.

A portion of the first cover portion in the thickness direction may continuously extend laterally or rearward to form the second cover portion 292 and the third cover portion 293. The first cover portion 291 may have a structure in which the first insulating layer 2951 and the second insulating layer 2943 are stacked on both surfaces of the insulating layer 2941. The second cover portion 292 and the third cover portion 293 may be formed by including at least one of the insulating layer 2941, the first insulating layer 2951, and the second insulating layer 2943.

The second cover portion 292 may include only one of the insulating layer 2941, the first insulating layer 2951, and the second insulating layer 2943. The second cover portion 292 may include two of the insulating layer 2941, the first insulating layer 2951, and the second insulating layer 2943. The second cover portion 292 may include the insulating layer 2941 and the first insulating layer 2951 or include the insulating layer 2941 and the second insulating layer 2943.

Likewise, the third cover portion 293 may include only one of the insulating layer 2941, the first insulating layer 2951, and the second insulating layer 2943. The third cover portion 293 may include two of the insulating layer 2941, the first insulating layer 2951, and the second insulating layer 2943. The third cover portion 293 may include the insulating layer 2941 and the first insulating layer 2951 or include the insulating layer 2941 and the second insulating layer 2943.

The description of the present disclosure discloses an embodiment in which a portion of the first cover portion 291 in the thickness direction extends in the front-rear direction to form the second cover portion 292 and the third cover portion 293, but this description is intended to disclose an embodiment and is not intended to be limited thereto. The second cover portion 292 and the third cover portion 293 are not limited to a specific structure and shape as long as they may insulate the second stack surface 4 by including the embodiment including the insulating layer 2941, the first insulating layer 2951, and the second insulating layer 2943 and the embodiment in which the second cover portion 292 and the third cover portion 293 have the same thickness as the first cover portion 291.

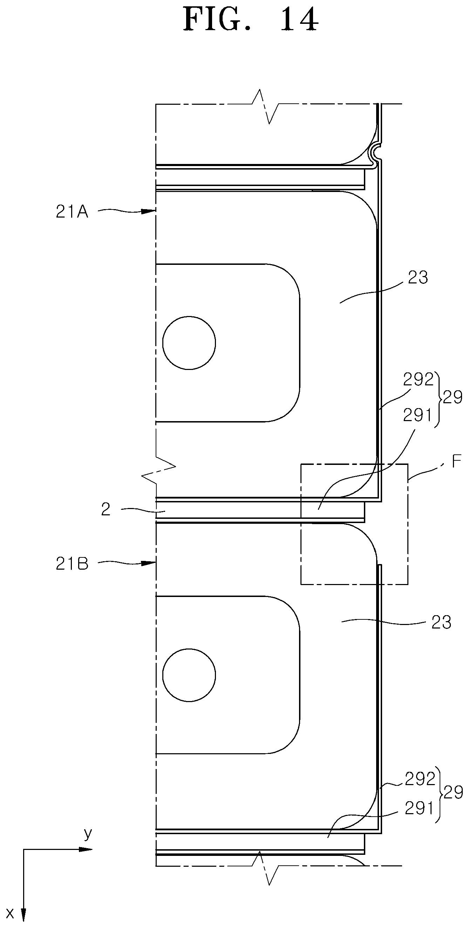

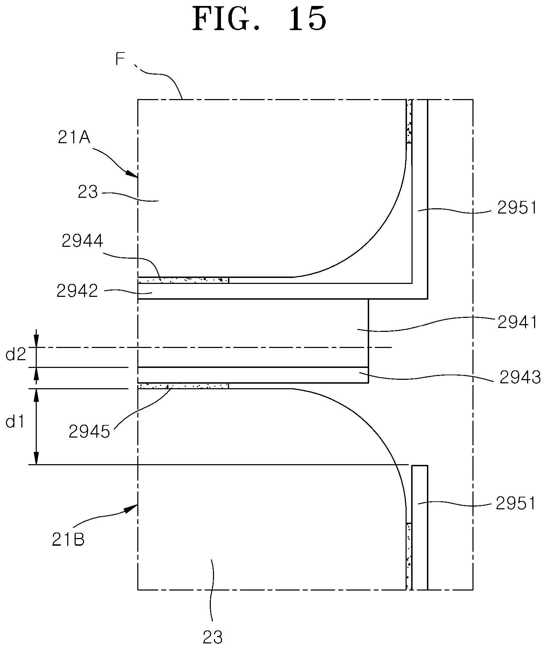

FIG. 14 is a schematic plan view showing main parts of the cell stack according to embodiments of the present disclosure, and FIG. 15 is an enlarged view of portion F in FIG. 14.

Referring to FIGS. 8 to 15, the second cover portion 292 may have a structure that includes the first insulating layer 2951. Since the first cell stack 2A is formed by arranging the plurality of battery cells 21 in the front-rear direction, the second stack surface 4 corresponding to a right side surface of the first cell stack 2A may have a structure formed by arranging the right side surfaces of the plurality of battery cells 21 continuously in the front-rear direction (see FIGS. 2 and 3). Since the plurality of second cover portions 292 having the first insulating layer 2951 are arranged continuously in the front-rear direction, the entire second stack surface 4 of the first cell stack 2A may be insulated.

Since the first cell stack 2A is formed by arranging the plurality of battery cells 21 in the front-rear direction, the third stack surface 5 corresponding to a left side surface of the first cell stack 2A may have a structure formed by arranging the left side surfaces of the plurality of battery cells 21 continuously in the front-rear direction. Since the plurality of third cover portions 293 having the first insulating layer 2951 are arranged continuously in the front-rear direction, the entire third stack surface 5 of the first cell stack 2A may be insulated.

While the second cell stack 2B is disposed at the right side of the first cell stack 2A, the second cover portion 292 of the first cell stack 2A may face the third cover portion 293 of the second cell stack 2B in the left-right direction. The second cover portion 292 of the first cell stack 2A and the third cover portion 293 of the second cell stack 2B may come into contact with each other and may be disposed to overlap each other in the left-right direction (y-direction).

Therefore, the first cell stack 2A and the second cell stack 2B may be mutually insulated in multiple stages by the second cover portion 292 and the third cover portion 293. A gap between the first cell stack 2A and the second cell stack 2B may be insulated in multiple stages by the plurality of first insulating layers 2951 provided on the second cover portion 292 and the third cover portion 293. In this way, the first cell stack 2A and the second cell stack 2B may be mutually insulated by the plurality of second cover portions 292 and third cover portions 293 that are coupled to a plurality of (or other) battery cells 21.

In this way, the plurality of battery cells 21 provided in the first cell stack 2A may be mutually insulated by the first cover portion 291. The first cell stack 2A and the second cell stack 2B may have the second stack surface 4 and the third stack surface 5 insulated by the plurality of second cover portions 292 and third cover portions 293 that are coupled to the plurality of (or other) battery cells 21. In addition, the first cell stack 2A and the second cell stack 2B may be mutually insulated by the plurality of second cover portions 292 and third cover portions 293 that are coupled to the plurality of (or other) battery cells 21.

The module case 7 may include a first inner surface 711 positioned at the right side (y-direction) of the first cell stack 2A and the second cell stack 2B, and a second inner surface 712 positioned at the left side of the first cell stack 2A and the second cell stack 2B. While the second cell stack 2B is disposed at the right side of the first cell stack 2A, the first inner surface 711 may be insulated from the second cell stack 2B by the plurality of second cover portions 292 provided on the second cell stack 2B. The second inner surface 712 may be insulated from the first cell stack 2A by the plurality of third cover portions 293.

A first adhesive layer 2944 may be further formed on a rear surface of the first cover portion 291 in contact with the first surface 232 of the cell case 23. The first adhesive layer 2944 may be stacked on a rear surface of the first insulating layer 2951. The first adhesive layer 2944 may include an adhesive material that may attach the first insulating layer 2951 to the first surface 232.

The first cover portion 291 may be attached to the first surface 232 of the cell case 23 by the first adhesive layer 2944. The first adhesive layer 2944 may be formed on a portion or the entirety of the first cover portion 291. The first adhesive layer 2944 may have a set width in the left-right direction and may be disposed on the left and right side portions of the first cover portion 291.

The first adhesive layer 2944 may also be formed on a left side surface of the second cover portion 292 in contact with the second surface 233 of the cell case 23. The first adhesive layer 2944 may be stacked on a left side surface of the first insulating layer 2951. The first adhesive layer 2944 may include an adhesive material that may attach the first insulating layer 2951 including an insulating material to the second surface 233.

The second cover portion 292 may be attached to the second surface 233 of the cell case 23 by the first adhesive layer 2944. The first adhesive layer 2944 may be formed on a portion or the entirety of the second cover portion 292. The first adhesive layer 2944 may have a set width in the front-rear direction and may be disposed on a central portion of the second cover portion 292 in the front-rear direction.

The first adhesive layer 2944 may also be formed on a right side surface of the third cover portion 293 in contact with the third surface 234 of the cell case 23. The first adhesive layer 2944 may be stacked on a right side surface of the first insulating layer 2951. The first adhesive layer 2944 may include an adhesive material that may attach the first insulating layer 2951 including an insulating material to the third surface 234.

The third cover portion 293 may be attached to the third surface 234 of the cell case 23 by the first adhesive layer 2944. The first adhesive layer 2944 may be formed on a portion or the entirety of the third cover portion 293. The first adhesive layer 2944 may have a set width in the front-rear direction and may be disposed on a central portion of the third cover portion 293 in the front-rear direction.

The first cover portion 291, the second cover portion 292, and the third cover portion 293 may be attached to the first surface 232, the second surface 233, and the third surface 234 of the cell case 23 by the first adhesive layer 2944, respectively. In this way, the insulating cover 29 may be integrally bonded to the outer surface of the cell case 23 by the first adhesive layer 2944.

A second adhesive layer 2945 may be further formed on the front surface of the first cover portion 291. The second adhesive layer 2945 may be stacked on a front surface of the second insulating layer 2943. The second adhesive layer 2945 may include an adhesive material that may attach the second insulating layer 2943 to the fourth surface 235 of another battery cell 21.

For example, the second adhesive layer 2945 may be formed on the front surface of the first cover portion 291 provided on the first battery cell 21A and attached to a rear surface of the second battery cell 21B disposed in front of the first battery cell 21A (see FIG. 2). The first battery cell 21A and the second battery cell 21B may be bonded by the second adhesive layer 2945.

The plurality of battery cells 21 including the first battery cell 21A and the second battery cell 21B may be bonded in the front-rear direction (x-direction) using the second adhesive layer 2945, and the plurality of battery cells 21 including the first battery cell 21A and the second battery cell 21B can be prevented from being individually moved due to any external force.

In this way, the plurality of battery cells 21 including the first battery cell 21A and the second battery cell 21B may be bonded integrally using the second adhesive layer 2945. Therefore, a single cell stack 2 formed by arranging the plurality of battery cells 21 in the front-rear direction may have a single lumped shape due to the second adhesive layer 2945. For example, the first cell stack 2A may have a structure in which the plurality of battery cells 21 are bonded integrally by the second adhesive layer 2945. In addition, the second cell stack 2B may have a structure in which the plurality of battery cells 21 are bonded integrally by the second adhesive layer 2945.

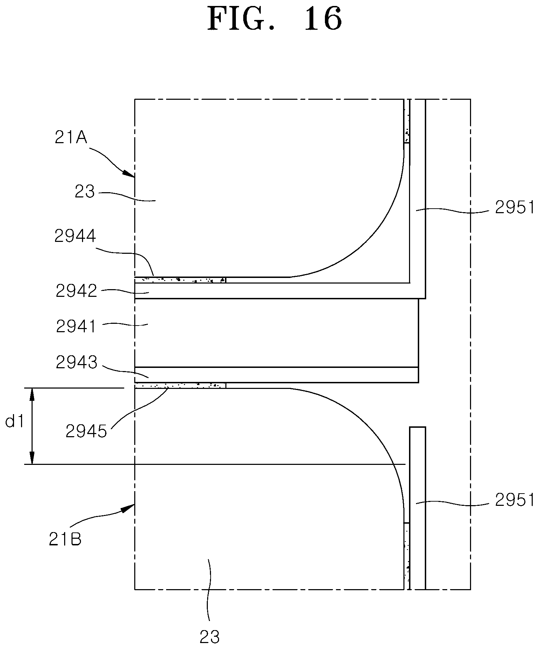

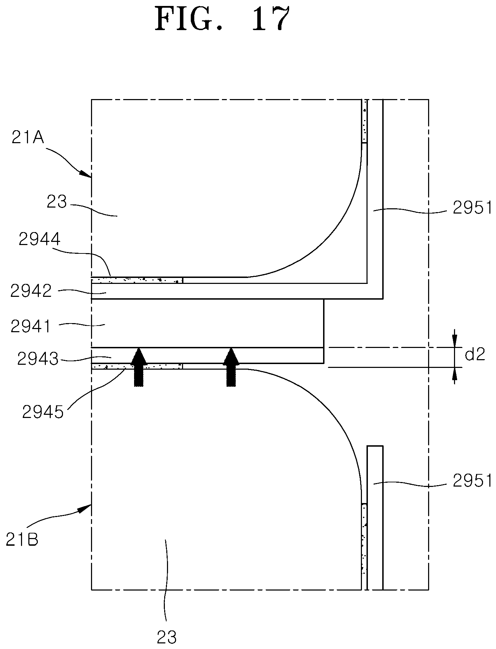

FIG. 16 is a conceptual diagram showing an assembly tolerance of the insulating cover, and FIG. 17 is a conceptual diagram showing an operation of reducing a thickness of the insulating cover and implementing a buffering function.

Referring to FIGS. 7, 8, 15, and 16, when the insulating cover 29 is attached to the cell case 23, a position of the right end of the first cover portion 291 with respect to the right end of the cell case 23 may have a difference within an allowable tolerance range. A length of the second cover portion 292 or an extension length of the first insulating layer 2951 from the first cover portion 291 to the second cover portion 292 preferably has a set gap d1 that is equal to or greater than the allowable tolerance range for assembly (attachment) of the insulating cover 29 with respect to a rear end of the second surface 233.

FIG. 15 shows a state in which the insulation layer 2941 of the first cover portion 291 of the first battery cell 21A is not positioned on an extension line of the first insulation layer 2951 of the second cover portion 292 of the second battery cell 21B in the front-rear direction. FIG. 16 shows a state in which the insulation layer 2941 of the first cover portion 291 of the first battery cell 21A is positioned on the extension line of the first insulation layer 2951 of the second cover portion 292 of the second battery cell 21B in the front-rear direction.

Assuming that the state shown in FIG. 15 is a state in which the insulating cover 29 is attached to the cell case 23 without any error, the length of the second cover portion 292 or the extension length of the first insulating layer 2951 from the first cover portion 291 to the second cover portion 292 preferably has the set gap d1 from the rear end of the second surface 233.

By forming the set gap d1, when the set gap d1 is within the allowable tolerance range even when the insulating cover 29 of the first battery cell 21A is attached to the cell case 23 as shown in FIG. 16, the first insulating layer 2951 provided on the second cover portion 292 of the second battery cell 21B can be prevented from interfering with the second insulating layer 2943 provided on the first cover portion 291 of the first battery cell 21A.

When the insulating cover 29 of the second battery cell 21B is also attached to the cell case 23 like the insulating cover 29 of the first battery cell 21A shown in FIG. 16, a rear end of the first insulating layer 2951 provided on the second cover portion 292 of the second battery cell 21B may be positioned further rearward compared to the state shown in FIG. 15. By forming the set gap d1, when the set gap d1 is within the allowable tolerance range even when a position of the rear end of the first insulating layer 2951 is changed in this way, the first insulating layer 2951 of the second cover portion 292 of the second battery cell 21B can be prevented from interfering with the second insulating layer 2943 of the first cover portion 291 of the first battery cell 21A.

In this way, the length of the second cover portion 292 or the extension length of the first insulating layer 2951 from the first cover portion 291 to the second cover portion 292 preferably has the set gap d1 that is equal to or greater than the allowable tolerance range for assembly (attachment) of the insulating cover 29 from the rear end of the second surface 233.

By forming the set gap d1, it is possible to prevent the insulating cover 29 of the first battery cell 21A from interfering with the insulating cover 29 of the second battery cell 21B. Therefore, it is possible to prevent a rear end portion of the first insulating layer 2951 including an insulating material or a right portion of the second insulating layer 2943 from being deformed or damaged into any shape by a pressing force applied in the front-rear direction and prevent the deterioration of insulating performance due to deformation or damage of the first insulating layer 2951 and the second insulating layer 2943.

The insulating layer 2941 may be formed of an insulating material such as aerogel. When the aerogel is applied as the material of the insulating layer 2941, a buffering function may be implemented by pores on the aerogel. As shown in FIG. 17, when an impact force is applied to the battery module 1 or vibrations occur therein in the front-rear direction, it is possible to reduce the thickness of the insulating layer 2941 in the front-rear direction, buffer the impact, and diminish vibrations. The arrows shown in FIG. 17 indicate a load in the front-rear direction including vibrations, an impact force, and a pressing force, and d2 shown in FIG. 17 denotes a thickness change amount d2 in which the thickness of the insulation layer 2941 is changed by being compressed.

When the cell stack 2 is assembled by being inserted into a limited space of the module case 7, the thickness of the insulation layer 2941 can be reduced by the load applied to the cell stack 2 in the front-rear direction. Therefore, even when a manufacturing error occurs in the sizes of the cell stack 2 and the module case 7, such an error may be compensated for by the insulation layer 2941.

In implementing the above-described operation, the insulation layer 2941 may further include another buffering member (no reference numeral) having a sponge structure in addition to the aerogel. In addition, another buffering member having a sponge structure may be additionally provided separately from the insulation layer 2941. Such another buffering member may be bonded to the insulating layer 2941, the first insulating layer 2951, and the second insulating layer 2943 by an adhesive material (not shown) having an adhesive property.

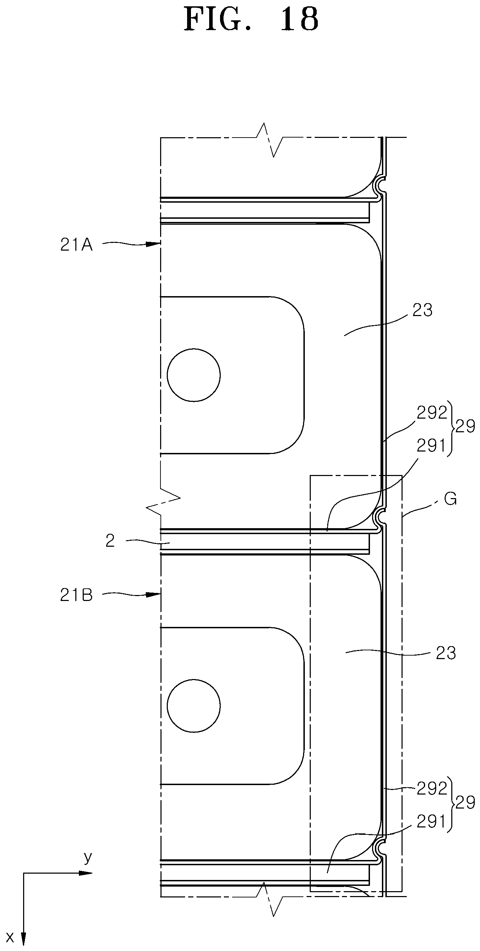

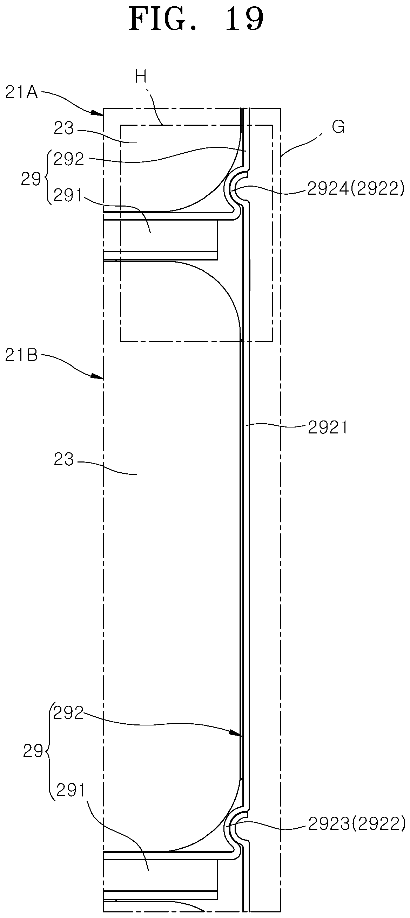

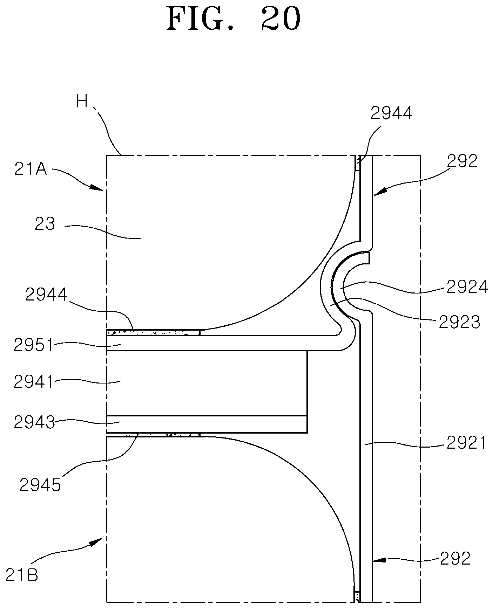

FIG. 18 is a schematic plan view showing main parts of a cell stack according to embodiments of the present disclosure, FIG. 19 is an enlarged view of portion G in FIG. 18, and FIG. 20 is an enlarged view of portion H in FIG. 19.

Referring to FIGS. 18 to 20, the second cover portion 292 of the insulation cover 29 according to embodiments of the present disclosure may include a second cover main body 2921 and an overlapping portion 2922.

The second cover main body 2921 may have a sheet structure in a flat shape in contact with the second surface 233. The overlapping portion 2922 may be formed integrally with the second cover main body 2921 at each of front and rear portions of the second cover main body 2921. The second cover main body 2921 and the overlapping portion 2922 may have a form in which a single first insulating layer 2951 is continuously connected.

While the second cover main body 2921 comes into contact with the second surface 233, the overlapping portion 2922 may be positioned to be spaced apart from the second surface 233. A portion of the overlapping portion 2922 provided on the first battery cell 21A may extend to the outside of the second surface 233 of the first battery cell 21A. In this way, the overlapping portion 2922 of the first battery cell 21A extending to the outside of the second surface 233 may come into contact with the second cover portion 292 provided on the second battery cell 21B.

The overlapping portion 2922 may include a first fastener 2923 and a second fastener 2924.

The first fastener 2923 may be disposed between the second cover main body 2921 and the first cover portion 291. The first fastener 2923 may have a shape of a groove that is concave to the left side thereof. The first fastener 2923 may be positioned to correspond to a front corner portion of the cell case 23. The corner portion (no reference numeral) of the cell case 23 may have a curved shape.

The second fastener 2924 may be positioned at a side opposite to the first fastener 2923 with the second cover main body 2921 interposed therebetween. The first fastener 2923 may be positioned at the front of the second cover main body 2921, and the second fastener 2924 may be positioned at the rear of the second cover main body 2921. The second fastener 2924 may have a shape that protrudes convexly to the left side thereof.

The second fastener 2924 may be positioned behind the cell case 23 and fastened to the first fastener 2923 provided on another battery cell 21 positioned therebehind. The second fastener 2924 in a protruding shape provided on the second battery cell 21B may be fastened by being inserted into the first fastener 2923 in a groove shape provided in the first battery cell 21A.

The first fastener 2923 of the first battery cell 21A and the second fastener 2924 of the second battery cell 21B may have mutually corresponding shapes, may be mutually stacked in the left-right direction, and may come into surface contact with each other. In addition, the first fastener 2923 of the first battery cell 21A and the second fastener 2924 of the second battery cell 21B may be coupled in a male-female coupling manner so that the movement in the left-right direction and the front-rear direction can be stably restrained.

Since the first fastener 2923 of the first battery cell 21A overlaps the second fastener 2924 of the second battery cell 21B, the second stack surface 4 of the cell stack 2 may be continuously covered completely without any gap by the plurality of second cover portions 292. That is, since the plurality of second cover portions 292 provided on a plurality of (or other) battery cells 21 extend across the plurality of battery cells 21 and the front and rear portions thereof overlap each other, any gap not covered by the second cover portions 292 is not formed between the plurality of battery cells 21.

When the first insulating layer 2951 has elasticity or at least one of the first fastener 2923 and the second fastener 2924 has elasticity, the second fastener 2924 of the second battery cell 21B may be fastened to the first fastener 2923 of the first battery cell 21A by snap fitting. Therefore, the coupling state between the plurality of second cover portions 292 can be stably maintained.

Even when the first insulating layer 2951, the first fastener 2923, and the second fastener 2924 all do not have elasticity, the first fastener 2923 and the second fastener 2924 are coupled in a male-female coupling manner while being stacked and in surface contact with each other in the left-right direction, and thus the movement in the left-right direction and front-rear direction can be stably restrained while the cell stack 2 is inserted into the battery module 1. In addition, the first fastener 2923 and the second fastener 2924 may be mutually adhered in a male-female coupling and surface contact state.

In a case in which the first fastener 2923 has a concave groove shape, the first fastener 2923 may be manufactured by processing a portion of a plate-shaped member into a concavely bent shape. In addition, in a case in which the second fastener 2924 has a convexly protruding shape, the second fastener 2924 may be manufactured by processing a portion of a plate-shaped member into a convexly bent shape or coupling an additional member that may be inserted into the first fastener 2923. The first fastener 2923 and the second fastener 2924 are not limited to a specific structure and shape, including the above-described embodiments as long as they may be coupled in a male-female coupling manner.

Since the third cover portion 293 has a structure and shape corresponding to the second cover portion 292, the description of the third cover portion 293 overlaps or corresponds to the description of the second cover portion 292. Therefore, detailed description of the structure and shape of the third cover portion 293 will be replaced with the description of the second cover portion 292.

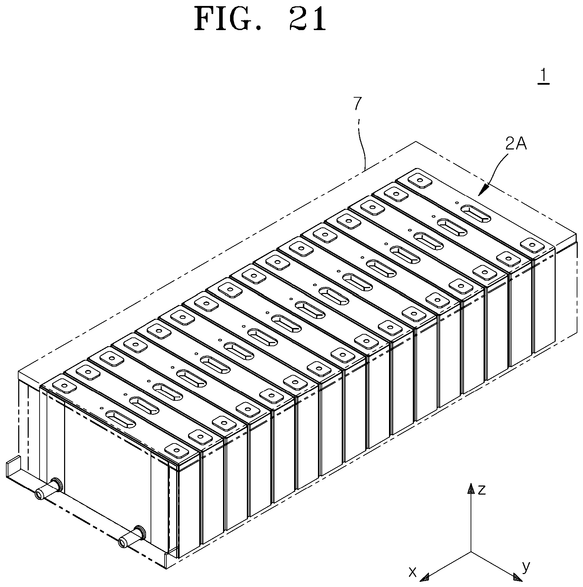

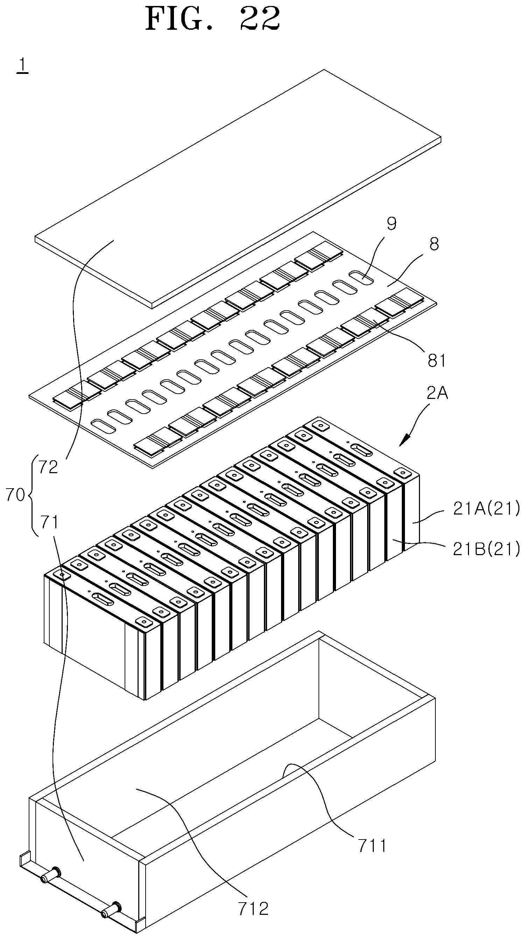

FIG. 21 is a schematic perspective view showing a battery module according to embodiments of the present disclosure, and FIG. 22 is a schematic perspective view showing the battery module according to embodiments of the present disclosure.

Referring to FIGS. 21 and 22, the battery module 1 according to embodiments of the present disclosure may have a structure that includes a single cell stack 2 corresponding to the first cell stack 2A compared to the battery module 1 according to embodiments of the present disclosure shown in FIGS. 1 and 2.

The first cell stack 2A of the battery module 1 according to embodiments of the present disclosure is the same as or corresponds to the first cell stack 2A of the battery module 1 according to embodiments of the present disclosure. Therefore, detailed description of the first cell stack 2A of the battery module 1 according to embodiments of the present disclosure will be replaced with the description of the first cell stack 2A of the battery module 1 according to embodiments of the present disclosure.

The insulating cover 29 is coupled to the first surface 232 and the second surface 233 of the cell case 23. The first surface 232 may be a front surface of the cell case 23, and the second surface 233 may be a right side surface of the cell case 23.

The first stack surface 3 of the first cell stack 2A may be insulated by the first cover portion 291 of the insulating cover 29 that covers the first surface 232 of the battery cell 21 positioned at the frontmost position among the plurality of battery cells 21 arranged in the front-rear direction (x-direction) (see FIGS. 3 and 7). The gaps between the plurality of battery cells 21 may be insulated by the first cover portions 291 of the plurality of insulating covers 29 that cover the first surfaces 323 of the plurality of battery cells 21.

The second stack surface 4 of the first cell stack 2A may be insulated by the second cover portions 292 of the plurality of insulating covers 29 that cover the second surfaces 233 of a plurality of (or other) battery cells 21. The third stack surface 5 of the first cell stack 2A may be insulated by the third cover portions 293 of the plurality of insulating covers 29 that cover the third surfaces 324 of the plurality of (or other) battery cells 21.

The module case 7 may include the first inner surface 711 positioned at the right side (y-direction) of the first cell stack 2A and the second inner surface 712 positioned at the left side of the first cell stack 2A. The first inner surface 711 may be insulated from the first cell stack 2A by the plurality of second cover portions 292 provided on the first cell stack 2A. The second inner surface 712 may be insulated from the first cell stack 2A by the plurality of third cover portions 293.

According to embodiments of the present disclosure, in a structure in which a plurality of battery cells are arranged in a front-rear direction to form a cell stack, since insulating covers are provided on front and side surfaces of each of the plurality of battery cells, it is possible to block heat from being transferred to other battery cells during thermal runaway of the battery cells due to insulating cover portions provided on front surfaces of the battery cells, thereby preventing explosion of the batteries due to heat diffusion, and at the same time, insulating side surfaces of all cell stacks by the insulating cover portions provided on side surface portions of the battery cell.

In addition, when a plurality of cell stacks are disposed to face one another, since the side surfaces of all cell stacks can be insulated by the insulating cover portions provided on the side surface portions of the battery cell, installation of separate insulating members between the plurality of cell stacks can be omitted. In addition, since the cell stacks and a module case can also be insulated, installation of a separate insulating member between the cell stacks and the module case can also be omitted.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. A battery module comprising:
one or more cell stacks formed by arranging a plurality of battery cells in a first direction and having a first stack surface facing in the first direction and a second stack surface facing in a second direction; and
a module case in which the cell stacks are accommodated,
wherein each of the battery cells comprises:
an electrode assembly;
a cell case in which the electrode assembly is accommodated and which has a first surface facing the first direction and a second surface facing in the second direction; and
an insulating cover coupled to the first surface and the second surface, and
the second stack surface is insulated by a plurality of insulating covers provided on the plurality of battery cells.

2. The battery module as claimed in claim 1, wherein the insulating cover comprises:
a first cover portion coupled to the first surface; and
a second cover portion formed by extending a portion of a thickness direction of the first cover portion in the first direction and coupled to the second surface.

3. The battery module as claimed in claim 2, wherein the insulating cover comprises:
a first layer that comprises a first material and is formed on the first cover portion; and
a second layer that comprises a second material and is formed to extend from the first cover portion to the second cover portion.

4. The battery module as claimed in claim 3, wherein the first material comprises aerogel, and
the second material comprises mica.

5. The battery module as claimed in any of claims 2 to 4, wherein the first cover portion comprises:
an insulating layer comprising an insulating material;
a first insulating layer comprising an insulating material and stacked on the insulating layer; and
a second insulating layer stacked on the insulating layer at a side opposite to that of the first insulating layer, and
the second cover portion is formed by extending the first insulating layer in the first direction.

6. The battery module as claimed in claim 5, wherein the insulating layer comprises a buffering member that has a thickness reduced due to a load acting in the first direction.

7. The battery module as claimed in any preceding claim, wherein the cell stack comprises a first cell stack formed by arranging in the first direction the plurality of battery cells that comprise a first battery cell and a second battery cell,
the insulating cover comprises:
a first cover portion coupled to the first surface; and
a second cover portion connected to the first cover portion and coupled to the second surface, and
the plurality of battery cells provided in the first cell stack are mutually insulated by the first cover portions, and
the second stack surface of the first cell stack is insulated by a plurality of second cover portions provided on the plurality of battery cells.

8. The battery module as claimed in claim 7, wherein the cell stack further comprises a second cell stack disposed in the second direction of the first cell stack, and
the first cell stack and the second cell stack are mutually insulated by the plurality of second cover portions coupled to the plurality of battery cells.

9. The battery module as claimed in claim 7 or claim 8, wherein the second cover portion comprises:
a second cover main body in contact with the second surface; and
an overlapping portion connected to the second cover main body and extending to an outside of the second surface, and
the overlapping portion provided on the first battery cell comes into contact with the second cover portion provided on the second battery cell, and
wherein the overlapping portion comprises:
a first fastener disposed between the second cover main body and the first cover portion; and
a second fastener positioned at a side opposite to the first fastener with the second cover main body interposed therebetween, and
the first fastener provided on the first battery cell is fastened to the second fastener provided on the second battery cell.

10. The battery module as claimed in claim 9, wherein one of the first fastener and the second fastener has a shape of a groove that is concave in the second direction, and
the other of the first fastener and the second fastener has a shape that protrudes convexly in the second direction.

11. The battery module as claimed in any of claims 7 to 10, wherein the cell stack further comprises a third stack surface facing in a third direction substantially opposite to the second direction,
the cell case further comprises a third surface positioned at a side opposite to the second surface,
the insulating cover further comprises a third cover portion connected to the first cover portion and in contact with the third surface, and
the third stack surface is insulated by a plurality of third cover portions provided on the plurality of battery cells.

12. The battery module as claimed in claim 11, wherein the module case comprises:
a first inner surface positioned in the second direction of the first cell stack and insulated from the second stack surface by the second cover portion; and
a second inner surface positioned in the third direction of the first cell stack and insulated from the third stack surface by the third cover portion.

13. The battery module as claimed in claim 11 or claim 12, wherein the cell stack further comprises a second cell stack disposed in the second direction of the first cell stack, and
the first cell stack and the second cell stack are mutually insulated by the plurality of second cover portions and third cover portions that are coupled to the plurality of battery cells, and
the plurality of second cover portions provided in the first cell stack are disposed to face and overlap the plurality of third cover portions provided in the second cell stack in the second direction.

14. The battery module as claimed in any of claims 11 to 13, wherein the first cover portion has a first thickness,
the second cover portion has a second thickness smaller than the first thickness, and
the third cover portion has a third thickness smaller than the first thickness.

15. The battery module as claimed in claim 13 or claim 14 when dependent on claim 13, wherein the module case comprises:
a first inner surface positioned in the second direction of the second cell stack and insulated from the second cell stack by the plurality of second cover portions; and
a second inner surface positioned in the third direction of the first cell stack and insulated from the first cell stack by the third cover portion.
